# FASCICULE DE BREVET EUROPEEN

(11) **EP 1 144 154 B1**
(45) Date de publication et mention de la délivrance du brevet: **20.11.2002**
(21) Numéro de dépôt: 99920919.0
(22) Date de dépôt: 26.05.1999
(51) Int. Cl.: B23Q 11/00

(54) **DISPOSITIF ET PROCEDE POUR EVACUER DES COPEAUX EN DEHORS D'UNE MACHINE-OUTIL**
VORRICHTUNG UND VERFAHREN ZUM ENTFERNEN VON SPÄNEN AUS EINER WERKZEUGMASCHINE
DEVICE FOR EVACUATING CUTTINGS CAST BY A MACHINE TOOL MACHINING HEAD, MACHINE TOOL COMPRISING SUCH A DEVICE AND SAID DEVICE WORKING METHOD

(30) Priorité: 27.05.1998 FR 9806667
(43) Date de publication de la demande: 17.10.2001
(73) Titulaire: RENAULT AUTOMATION COMAU, 92365 Meudon la Forêt, Cedex (FR)
(72) Inventeur: FIORONI, Claude, F-81100 Castres (FR)
(74) Mandataire: Richebourg, Michel François
(86) Numéro de dépôt international: FR9901227
(87) Numéro de publication internationale: WO99061201

(56) Documents cités:
- EP-A- 0 590 750
- FR-A- 2 464 096
- JP-A- 55 042 789
- US-A- 4 955 770

## Description

La présente invention a trait au domaine des machines-outils et notamment aux adaptations permettant l'évacuation optimale des copeaux lors de l'usinage d'une pièce par un ou plusieurs outils de coupe d'une machine-outil d'usinage.

Classiquement, les copeaux créés lors de l'usinage d'une pièce par le ou les outils d'une machine-outil d'usinage sont évacués de la zone d'usinage de ladite machine-outil au moyen de jets directionnels de liquide provenant de buses judicieusement orientées et disposées à proximité de l'outil ou du porte-outil de façon à entraîner les copeaux produits vers un carter d'évacuation qui, disposé dans la partie inférieure de la zone d'usinage de la machine-outil, recueille les copeaux avec le liquide. Néanmoins, l'utilisation de tels jets directionnels même judicieusement disposés, n'empêche pas l'accumulation des copeaux sous forme d'agglomérat dans les multiples zones de projection non arrosées par les jets de liquide. Ces agglomérats sont particulièrement importants lors de l'usinage à haute vitesse de matériaux tels que les matériaux à base d'aluminium pour lesquels les copeaux, de petites tailles, sont projetés dans tout l'espace environnant l'outil et la pièce à usiner. Les agglomérats de copeaux durcis et collés sur les parois environnantes se détachent alors de manière aléatoire et viennent perturber l'usinage de la pièce en cours, nécessitant l'arrêt et le nettoyage de la machine-outil.

Plusieurs solutions ont été imaginées par les concepteurs de machines-outils pour pallier à cet inconvénient comme celle qui consiste à multiplier le nombre de buses, ce qui a surtout pour conséquence de multiplier les canalisations et la complexité du dispositif d'évacuation et donc son coût.

Une des dernières innovations en ce qui concerne l'évacuation de copeaux par jets de liquide est décrite dans la demande de brevet français n° 2 751 254 et consiste en une buse multi-directionnelle et rotative assurant la projection de liquide dans une zone beaucoup plus importante que celle couverte par de simples buses et de façon saccadée ce qui améliore l'évacuation des copeaux.

Toutefois, un tel dispositif n'est pas applicable dans toutes les situations d'usinage notamment lors de l'utilisation d'un procédé d'usinage à sec. Dans ce cas, le nettoyage est réalisé pendant les périodes de manutention de la pièce ou en utilisant la gravité entraînant les copeaux sur les parois en pente d'un carter d'évacuation disposé en partie inférieure de la zone d'usinage, lorsque les temps de manutention n'autorisent pas un nettoyage efficace. L'utilisation de la gravité constitue une solution manquant d'efficacité notamment lors de la projection et donc de l'évacuation de copeaux de petite taille qui adhérent aux parois des carters.

De plus, l'évolution des normes en matière d'évacuation des copeaux et notamment les normes antipollution exigeant que le liquide d'évacuation soit retraité ou du moins évacué de façon propre, a poussé la demanderesse à mener des recherches dans le domaine de l'évacuation des copeaux projetés par le ou les outils d'une machine-outil d'usinage et à orienter ces recherches vers un arrêt pur et simple de l'utilisation des liquides d'évacuation.

Aussi, le but de la présente invention est de fournir un dispositif d'évacuation de copeaux ne nécessitant pas l'utilisation de liquide.

Un autre inconvénient de l'arrêt de l'utilisation de liquide de coupe et/ou d'évacuation en dehors de la quasi impossibilité d'évacuer les copeaux réside dans le réchauffement du poste d'usinage et donc du bâti de la machine-outil amenant des paramètres supplémentaires dans la qualité des usinages réalisés par la machine-outil.

Il est connu dans l'état de la technique antérieure les transporteurs à mouvements oscillatoires assurant le déplacement de matière telle celle décrite dans le brevet français n° 2 464 096. Ce transporteur qui dans l'application décrite, adopte la forme d'une trémie d'évacuation, a pour fonction d'éviter toute obstruction du broyeur à cylindres dont elle forme la partie inférieure, la matière broyée étant de la roche argileuse.

La demanderesse a avantageusement orienté ses recherches afin d'exploiter ce principe de transporteur dans un domaine nouveau à savoir celui des machines-outils et dans une application nouvelle à savoir l'évacuation des copeaux.

Selon la caractéristique principale de l'invention, le dispositif d'évacuation des copeaux projetés par la tête d'usinage d'une machine-outil, à l'intérieur d'une zone d'usinage délimitée, lors de l'usinage d'une pièce par le ou les outils d'une machine-outil d'usinage, ladite zone d'usinage comportant dans sa partie inférieure un carter d'évacuation des copeaux, est remarquable en ce qu'il est constitué par un élément mobile qui, reprenant les pentes et formes dudit carter d'évacuation pour y diriger les copeaux projetés dessus et interposé entre ce dernier et ladite tête d'usinage, est associé au carter d'évacuation au moyen d'une liaison de type élastique de façon à assurer d'une part par sa présence une isolation thermique entre le poste d'usinage et le bâti de ladite machine-outil et d'autre part par son mouvement, empêcher le stationnement par adhérence des copeaux sur ses pentes et évacue lesdits copeaux.

Une liaison de type élastique a pour avantage d'autoriser les petits mouvements dus aux vibrations mais également d'accepter ces mouvements. En effet, tout autre type de liaison cinématique accepterait difficilement la mise en vibration de ses éléments.

Un autre avantage à la mise en vibration d'un élément d'une machine-outil réside dans le fait que l'ajout d'un élément quasi-indépendant constitue une isolant thermique entre la zone de coupe et le bâti de la machine. Cette fonction d'isolant thermique est la bienvenue étant donné que les processus de coupe ou d'usinage à sec sont générateurs de chaleur.

La mise en place d'une barrière thermique constituée non seulement par le dispositif lui-même mais aussi, par l'espace laissé entre ce dernier et le carter d'évacuation a donc pour avantage d'éviter au maximum la transmission de chaleur au bâti de la machine-outil qui soutient la plupart du temps les structures de guidage et d'entraînement et en conséquence les déformations liées à cette transmission de chaleur.

De plus, la mise en place d'un tel dispositif d'évacuation peut être réalisée sur des dispositifs déjà existants en ce qu'il nécessite peu de modifications à apporter à un carter ou bâti classique de machine-outil à savoir principalement, l'ajout d'un élément mobile au-dessus du carter d'évacuation des copeaux déjà existant.

Selon une caractéristique particulièrement avantageuse de l'invention, le dispositif est remarquable en ce que ledit élément mobile est associé à au moins un un vibrateur imprimant un mouvement vibratoire audit élément mobile par rapport au carter d'évacuation des copeaux.

L'utilisation de la vibration est particulièrement avantageuse en ce qu'elle ne requiert pas de grands espaces pour autoriser le mouvement de l'élément mobile.

Le fait d'imprimer une vibration constante à l'élément mobile, lors de l'usinage, permet, dès le contact d'un copeau sur les parois vibrantes de l'élément mobile d'acheminer celui-ci suivant la pente vers le carter d'évacuation de copeaux situé au-dessous.

Ce dispositif d'évacuation des copeaux projetés par la tête d'usinage d'une machine-outil ne constitue pas simplement une invention consistant à utiliser un moyen déjà connu dans une application équivalente sans en modifier le fonction.

En effet, le domaine des machine-outils d'usinage est très éloigné de celui dans lequel est décrite la trémie d'évacuation du brevet français n° 2 464 096. En outre, la fonction du dispositif de l'invention est d'interposer un élément mobile en la source de projection de copeaux et la zone d'évacuation elle-même. Cette fonction répond à un besoin nouveau à savoir l'évacuation des copeaux en l'absence de projection de liquide d'évacuation.

Aussi, les problèmes à résoudre sont distincts de ceux connus dans le broyage de la roche argileuse.

Une autre fonction spécifique de ce dispositif est son rôle d'isolant thermique particulièrement important dans une machine-outil réalisant des usinages requérant une très grande précision.

L'exploitation nouvelle de ce dispositif est donc inattendue dans le domaine de l'invention du fait de l'anticipation par la demanderesse de l'évolution du besoin au niveau de l'évacuation des copeaux et du respect des nouvelles normes antipollution.

L'invention concerne également le procédé de travail d'un tel dispositif qui, selon un premier choix technologique particulièrement judicieux, consiste à assurer, par vibration, le déplacement vers le haut des copeaux sur les parois 110 de l'élément mobile 100.

Selon un autre choix technologique particulièrement judicieux, le procédé de travail du dispositif d'évacuation des copeaux de l'invention consiste à assurer, par vibration, le déplacement vers le bas des copeaux sur les parois de l'élément mobile. Ce dernier choix va à l'encontre des dernières conceptions mises en oeuvre pour l'évacuation des copeaux en ce que l'utilisation abusive de la gravité pour l'évacuation à sec ou associée à des jets de liquides des copeaux, ont amené les concepteurs de machine-outil à créer des bâtis comportant une partie inférieure comprenant un dispositif d'évacuation des copeaux. Ce procédé particulièrement nouveau et inventif permet donc, en se libérant de la contrainte, au moyen de la vibration, d'une évacuation en zone inférieure par rapport à la zone d'usinage, d'envisager une évacuation des copeaux vers le haut ou du moins selon un plan horizontal.

Les concepts fondamentaux de l'invention venant d'être exposés ci-dessus dans leur forme la plus élémentaire, d'autres détails et caractéristiques ressortiront plus clairement à la lecture de la description qui suit donnant à titre d'exemple non limitatif et en regard des dessins annexés, plusieurs modes de réalisation d'un dispositif d'évacuation des copeaux conforme à l'invention acheminant les copeaux vers le bas. Cette description se réfère aux dessins annexés sur lesquels :
La figure 1 est une vue schématique d'ensemble d'un dispositif d'évacuation conforme à l'invention.
La figure 2 est une vue schématique d'ensemble d'un bâti de machine-outil d'usinage adoptant le dispositif d'évacuation de la figure 1.
La figure 3 est une vue en coupe d'un bâti de machine-outil d'usinage différent de celui représenté sur le dessin de la figure 2 et adoptant un autre mode de réalisation du dispositif d'évacuation conforme à l'invention.

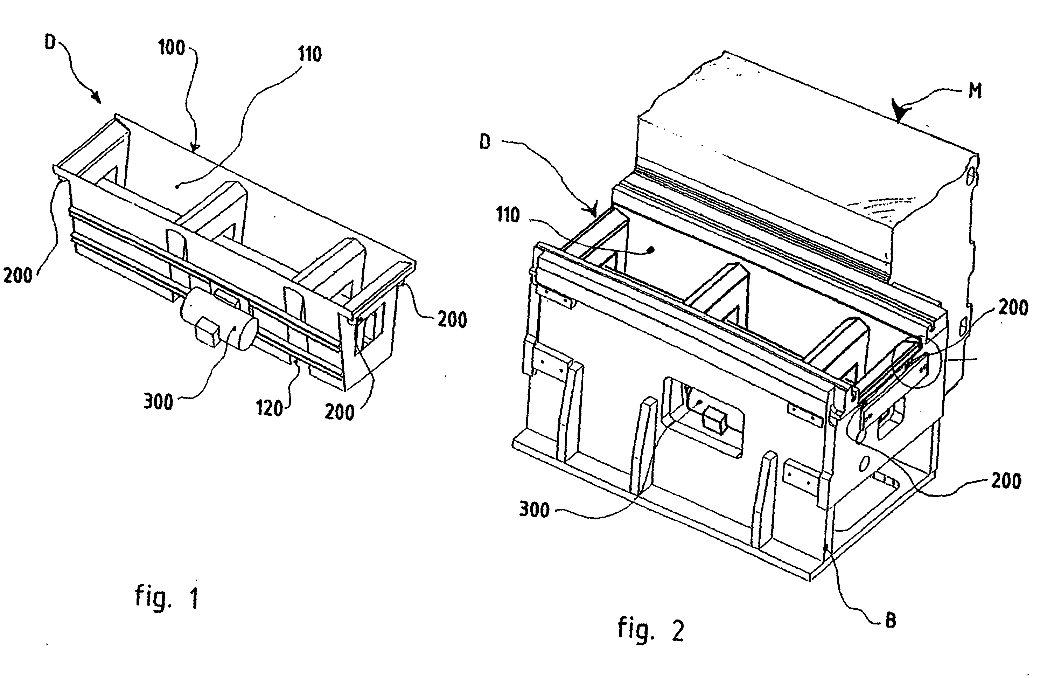

Tel qu'illustré sur le dessin de la figure 1, le dispositif référencé D dans son ensemble, se compose d'un assemblage 100 de tôles mécano-soudées constituant un élément mobile qui reprend sensiblement avec ses formes extérieures la forme intérieure du carter d'évacuation ou de la partie du bâti B destinée à cette fonction d'une machine-outil d'usinage M illustrée sur le dessin de la figure 2.

Cet assemblage de tôles 100 comprend une ouverture supérieure 110 ainsi qu'une ouverture inférieure 120, les copeaux projetés par l'outil non représenté de la machine-outil M tombant par l'ouverture supérieure 110.

Avantageusement, l'ouverture inférieure 120 est de dimensions moindres que l'ouverture supérieure 110 de façon à créer un étranglement.

Aussi, selon le mode de réalisation illustré de l'invention, l'élément mobile 100 adopte la forme d'une trémie ouverte vers le haut pour communiquer avec la zone d'usinage et vers le bas pour déboucher dans le carter d'évacuation.

Cette trémie 100 reprend les formes du bâti B auquel elle s'adapte, à la différence près, que ces dernières forment des pentes ou des "V" inversés afin de mieux orienter les copeaux projetés.

Selon l'invention, l'élément mobile formé par la trémie 100 s'ajuste avec jeu audit carter d'évacuation, ledit jeu étant défini de façon à placer des liaisons élastiques entre les parois supérieures du carter d'évacuation et inférieures de ladite trémie 100 et permettre le mouvement vibratoire de cette dernière. Ainsi, comme illustré sur les dessins des figures 1 et 2, l'assemblage de tôles comprend des supports élastiques 200 qui ont pour fonction d'assurer la liaison entre le bâti B et la trémie 100. Cette liaison doit autoriser le mouvement de vibration qui est ici réalisé au moyen d'un vibrateur 300 solidaire de l'assemblage de tôles 100.

Les supports élastiques 200 amortissent la vibration tout en l'autorisant et isole la trémie du reste du bâti B.

Aussi, le jeu présent entre la trémie 100 et le bâti B a non seulement pour fonction d'autoriser le mouvement oscillatoire de la trémie 100 par rapport au bâti B mais aussi de rendre indépendante la trémie 100 dudit bâti B et créer ainsi une isolation thermique. En effet, les liens existants entre le bâti B et la trémie 100 sont constitués par les seuls supports élastiques 200 et l'air présent entre le bâti B et la trémie 100 participe à cette isolation thermique.

Les copeaux projetés sur les parois de la trémie 100 sont donc mis en vibration les empêchant d'adhérer auxdites parois notamment celles en pentes et en "V" inversé. Lesdites parois en vibration orientent l'écoulement des copeaux vers la zone de stockage prévue à cet effet dans le bâti de la machine-outil M.

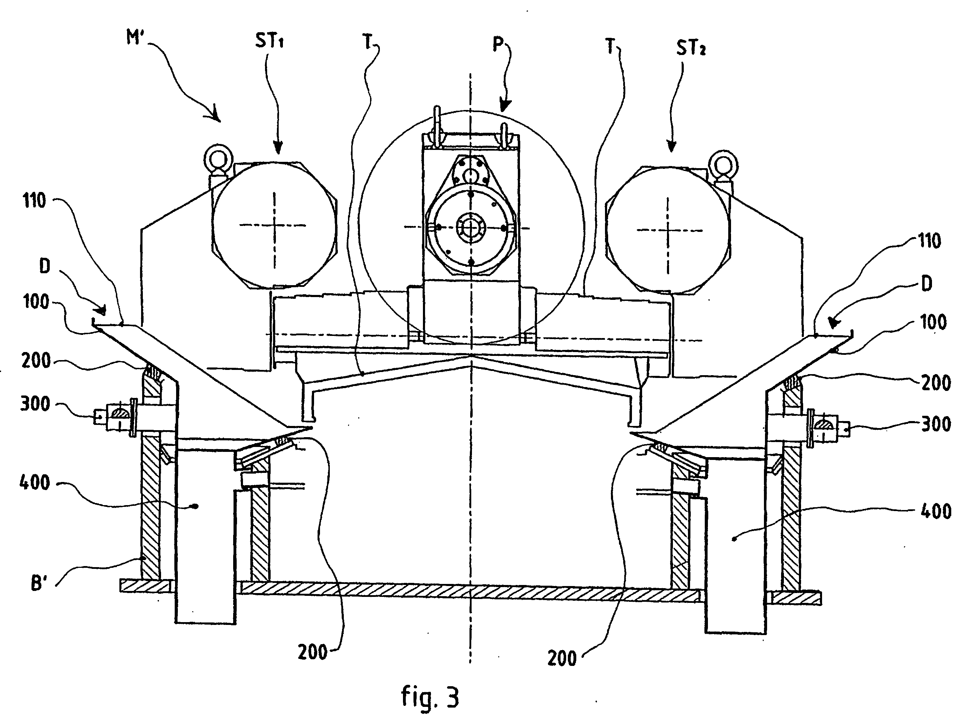

La figure 3 illustre un autre mode de réalisation du dispositif d'évacuation de copeaux D installé sur une machine-outil M'.

Cette machine-outil M' comporte une structure symétrique adoptant, agencés sur un même plan horizontal, deux stations de travail ST1 et ST2 sur lesquelles sont installées les pièces à usiner, et un poste d'usinage P comportant au moins un outil tournant qui, monté mobile en translation parallèlement à son axe de rotation ainsi que perpendiculairement à celui-ci, assure les usinages des pièces sur les deux stations de travail ST1 et ST2.

Sous chaque station de travail ST1 et ST2 est disposée une trémie 100, ou du moins l'ouverture supérieure 110 d'une trémie 100, formant le dispositif d'évacuation des copeaux D, et qui, par un jeu de tôles orientées, acheminent les copeaux projetés par le poste d'usinage P vers les goulottes verticales d'évacuation 400.

Selon cette application particulière, les guidages du poste d'usinage P de la machine-outil M' sont protégés par des capotages horizontaux télescopiques T qui, de par leur forme en toit et leur position centrale, orientent les copeaux projetés vers les dispositifs d'évacuation D disposés sous chaque station de travail ST1 et ST2. Aussi, étant donné que la partie centrale de la machine outil est occupée par la cinématique assurant la mise en mouvement du poste d'usinage P, l'ouverture 110 desdites trémies 100 s'ouvre davantage sur l'extérieur de la machine-outil M' que sur l'intérieur. Chaque trémie 100 est avantageusement équipée d'un vibrateur 300 assurant la mise en vibration des trémies 100 et donc des copeaux projetés sur les parois desdites trémies 100.

Conformément à l'invention, la liaison entre la trémie 100 orientant les copeaux et le bâti B' de cette machine-outil M' est assurée par des supports élastiques 200.

Conformément à l'invention, les parois extérieures de la trémie 100 s'ajustent avec jeu aux parois intérieures du bâti B' de la machine-outil M' sur laquelle le dispositif d'évacuation D est installé, afin d'autoriser son mouvement de vibration.

Comme illustrés sur les dessins des figures 2 et 3, les bâtis B et B' des machines-outils M et M' sont aménagés de façon à donner accès de l'extérieur aux vibrateurs 200 par une fenêtre pratiquée dans les parois desdits bâtis B et B'. Une telle fenêtre facilite l'accès et l'alimentation du vibrateur 200.

On comprend que le procédé d'évacuation de copeaux et le dispositif permettant de le mettre en oeuvre qui viennent d'être ci-dessus décrits et représentés, l'ont étés en vue d'une divulgation plutôt que d'une limitation.

Bien entendu, divers aménagements, modifications et améliorations pourront être apportés aux exemples ci-dessus, sans pour autant sortir du cadre de l'invention.

Ainsi, par exemple, il est facilement imaginable une zone d'usinage comportant des éléments mobile mis en vibration sur toutes ses parois que celles-ci soient verticales, horizontales ou inclinées.

De plus, le procédé de travail consistant à acheminer vers le haut les copeaux projetés sur l'élément mobile, pourrait être mis en oeuvre par un dispositif remarquable en ce que ledit élément mobile adopte la forme d'une rampe acheminant sur ses parois selon une pente ascendante les copeaux depuis la zone d'usinage vers au moins une goulotte d'évacuation située en position plus haute que la zone d'usinage.

## Revendications

1. Dispositif (D) d'évacuation des copeaux projetés à l'intérieur d'une zone d'usinage délimitée, lors de l'usinage d'une pièce par la tête d'usinage d'une machine outil d'usinage (M, M'), ladite zone d'usinage comportant dans sa partie inférieure un carter d'évacuation des copeaux, **CARACTERISE PAR LE FAIT QU'**il est constitué par un élément mobile (100) qui, reprenant les pentes et formes dudit carter d'évacuation pour y diriger les copeaux projetés dessus et interposé entre ce dernier et ladite tête d'usinage, est associé au carter d'évacuation au moyen d'une liaison de type élastique de façon à assurer d'une part par sa présence une isolation thermique entre le poste d'usinage et le bâti de ladite machine-outil et d'autre part par son mouvement, empêcher le stationnement par adhérence des copeaux sur ses pentes et évacue lesdits copeaux.

2. Dispositif (D) selon la revendication 1, **CARACTERISE PAR LE FAIT QUE** ledit élément mobile (100) est associé à au moins un vibrateur (300) imprimant un mouvement vibratoire audit élément mobile par rapport au carter d'évacuation des copeaux de façon à transmettre une vibration aux copeaux projetés sur ledit élément mobile (100) et permettre leur déplacement sur les parois (110) de ce dernier.

3. Dispositif (D) selon la revendication 1, **CARACTERISE PAR LE FAIT QUE** le susdit élément mobile (100) s'ajuste avec jeu audit carter d'évacuation, ledit jeu étant défini de façon à placer des liaisons élastiques (200) entre les parois supérieures du carter d'évacuation et inférieures dudit élément mobile (100) et permettre le mouvement vibratoire de ce dernier.

4. Dispositif (D) selon les revendications 1 à 3 prises ensemble, **CARACTERISE PAR LE FAIT QUE** ledit élément mobile (100) adopte la forme d'une trémie ouverte vers le haut pour communiquer avec la zone d'usinage et vers le bas pour déboucher dans le carter d'évacuation.

5. Dispositif (D) selon les revendications 1 à 3 prises ensemble, **CARACTERISE PAR LE FAIT QUE** ledit élément mobile (100) adopte la forme d'une rampe acheminant sur ses parois selon une pente ascendante les copeaux depuis la zone d'usinage vers au moins une goulotte d'évacuation située en position plus haute que la zone d'usinage.

6. Procédé de travail du dispositif selon la revendication 5, **CARACTÉRISÉ EN CE QU'**il consiste à assurer, par vibration, le déplacement vers le haut des copeaux sur les parois (110) de l'élément mobile (100).

7. Procédé de travail du dispositif selon la revendication 4, **CARACTÉRISÉ EN CE QU'**il consiste à assurer, par vibration, le déplacement vers le bas des copeaux sur les parois (110) de l'élément mobile (100).

8. Machine-outil adoptant un dispositif selon l'ensemble des revendications 1 à 5, **CARACTÉRISÉE PAR LE FAIT QUE** le bâti de cette dernière est aménagé de façon à donner accès de l'extérieur aux vibrateurs par une fenêtre pratiquée dans les parois desdits bâtis.

## Patentansprüche

1. Vorrichtung (D) zur Abfuhr von Spänen die im Inneren eines begrenzten Bearbeitungsbereichs bei der Bearbeitung eines Werkstücks durch den Bearbeitungskopf einer spanabtragenden Werkzeugmaschine (M,M') erzeugt werden, wobei der Bearbeitungsbereich in seinem unteren Abschnitt einen Abfuhrbehälter für die Späne aufweist, **dadurch gekennzeichnet, dass** sie aus einem beweglichen Bauteil (100) besteht, das an die Schrägen und Formen des Abfuhrbehälters angepasst ist um die oberhalb erzeugten Späne zu ihm zu fördern, das zwischen dem letzteren und dem Bearbeitungskopf eingesetzt ist und das mit dem Abfuhrbehälter über eine elastische Verbindung derart verbunden ist, dass einerseits durch sein Vorhandensein eine thermische Isolierung zwischen der Bearbeitungsstation und dem Gestell der Werkzeugmaschine gewährleistet ist und dass andererseits durch seine Bewegung ein Stillstand durch die Anhaftung von Spänen an seinen Wänden verhindert wird und diese abgeführt werden.

2. Vorrichtung (D) nach Anspruch 1, **dadurch gekennzeichnet, dass** das bewegliche Bauteil (100) wenigstens einem Schwingungserzeuger (300) zugeordnet ist, der das bewegliche Bauteil in Schwingungen versetzt relativ zum Abfuhrbehälter für die Späne, derart, dass den auf das bewegliche Bauteil (100) auftreffenden Spänen die Schwingungen übertragen werden und diese an den Wänden (110) des letzteren entlang gleiten.

3. Vorrichtung (D) nach Anspruch 1, **dadurch gekennzeichnet, dass** das bewegliche Bauteil (100) mit Spiel zum Abfuhrbehälter ausgerichtet ist, wobei das Spiel derart bemessen ist, dass die elastischen Verbindungen (200) zwischen den oberen Wänden des Abfuhrbehälters und den unteren Wänden des beweglichen Bauteils (100) eingesetzt werden können und die Schwingungsbewegung des letzteren ermöglicht wird.

4. Vorrichtung (D) nach Ansprüchen 1 bis 3 in ihrer Gesamtheit, **dadurch gekennzeichnet, dass** das bewegliche Bauteil (100) die Gestalt eines Trichters aufweist, der nach oben offen ist um mit dem Bearbeitungsbereich in Verbindung zu stehen und der nach unten offen ist um in den Abfuhrbehälter münden zu können.

5. Vorrichtung (D) nach Ansprüchen 1 bis 3 in ihrer Gesamtheit, **dadurch gekennzeichnet, dass** das bewegliche Bauteil (100) die Gestalt einer Rampe aufweist, die die im Bearbeitungsbereich erzeugten Späne entlang ihrer schräg ansteigenden Wände zu mindestens einer Abfuhrschurre fördert, die an einer Stelle angeordnet ist, die höher liegt als der Bearbeitungsbereich.

6. Arbeitsverfahren für die Vorrichtung nach Anspruch 5, **dadurch gekennzeichnet, dass** es darin besteht, durch Schwingungen die Förderung der Späne entlang der Wände (110) des beweglichen Bauteils (100) nach oben zu gewährleisten.

7. Arbeitsverfahren für die Vorrichtung nach Anspruch 4, **dadurch gekennzeichnet, dass** es darin besteht, durch Schwingungen die Förderung der Späne entlang der Wände (110) des beweglichen Bauteils (100) nach unten zu gewährleisten.

8. Werkzeugmaschine mit einer Vorrichtung nach der Gesamtheit der Ansprüche 1 bis 5, **dadurch gekennzeichnet, dass** das Gestell der letzteren derart ausgestaltet ist, dass ein Zugang von aussen zu den Schwingungserzeugern durch ein Fenster hindurch ermöglicht wird, das in die Wände des Gestells eingearbeitet ist.

## Claims

1. Device (D) for evacuating cuttings projected inside a machining zone delimited during the machining by the machining head of a machine tool (M, M'), said machining zone comprising in its lower part a case for evacuating cuttings, wherein it is constituted by a mobile element (100) that, adopting the slopes and shapes of said case for evacuating cuttings in order to direct on it the cuttings projected on it and placed between said case and said machining head, is associated to the case for evacuating cuttings through an elastic-type linkage, so as to ensure by its presence a heat insulation between the machining station and the frame of said machine tool on one hand, and to prevent by its motion the cuttings to adhere to its slopes and evacuates said cuttings on the other hand.

2. Device (D) according to claim 1, wherein said mobile element (100) is associated to at least one vibration generator (300) communicating a vibratory motion to said mobile element with respect to the case for evacuating cuttings, so as to transmit a vibration to the cuttings projected on said mobile element (100) and allow their displacement on the walls (110) of the latter.

3. Device (D) according to claim 1, wherein said mobile element (100) fits with some clearance to said case for evacuating cuttings, said clearance being defined so as to place the elastic linkages (200) between the superior walls of the case for evacuation and the inferior walls of said mobile element (100) and allow the vibratory motion of the latter.

4. Device (D) according to claims 1 to 3 taken together, wherein said mobile element (100) adopts the shape of a hopper open towards the top in order to communicate with the machining zone and towards the bottom to open into the case for evacuation.

5. Device (D) according to claims 1 to 3 taken together, wherein said mobile element (100) adopts the shape of a ramp carrying on its walls along an ascending slope the cuttings from the machining zone towards at least one chute for evacuation placed higher than the machining zone.

6. Working method of the device according to claim 5, wherein its function is to ensure, through vibration, the displacement towards the top of the cuttings on the walls (110) of the mobile element (100).

7. Working method of the device according to claim 4, wherein its function is to ensure, through vibration, the displacement towards the bottom of the cuttings on the walls (110) of the mobile element (100).

8. Machine tool adopting a device according to all of claims 1 to 5, wherein the frame of said machine tool is arranged so as to give access from the outside to vibration generators through a window cut into the walls of said frames.
